(19) Europäisches Patentamt
European Patent Office
Office européen des brevets

(11) **EP 3 884 296 B1**

(12) **EUROPÄISCHE PATENTSCHRIFT**

(45) Veröffentlichungstag und Bekanntmachung des Hinweises auf die Patenterteilung:
**25.02.2026   Patentblatt 2026/09**

(21) Anmeldenummer: **19801813.7**

(22) Anmeldetag: **07.11.2019**

(51) Internationale Patentklassifikation (IPC):
**G01S 7/52** (2006.01)      **G01S 15/10** (2006.01)
**G01S 15/34** (2006.01)

(52) Gemeinsame Patentklassifikation (CPC):
**G01S 7/52004; G01S 15/104;** G01S 15/34;
G01S 2007/52009

(86) Internationale Anmeldenummer:
**PCT/EP2019/080457**

(87) Internationale Veröffentlichungsnummer:
**WO 2020/104195 (28.05.2020 Gazette 2020/22)**

(54) **VERFAHREN UND ANALYSESYSTEM ZUM BESTIMMEN EINES ZUSTANDS EINER MEMBRAN EINES ULTRASCHALLSENSORS**

METHOD AND ANALYSIS SYSTEM FOR DETERMINING A STATE OF A DIAPHRAGM OF AN ULTRASOUND SENSOR

PROCÉDÉ ET SYSTÈME D'ANALYSE POUR DÉTERMINER UN ÉTAT D'UNE MEMBRANE D'UN CAPTEUR ULTRASONORE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:  **19.11.2018   DE 102018129044**

(43) Veröffentlichungstag der Anmeldung:
**29.09.2021   Patentblatt 2021/39**

(73) Patentinhaber: **Valeo Schalter und Sensoren GmbH**
**74321 Bietigheim-Bissingen (DE)**

(72) Erfinder:
• **POEPPERL, Maximilian**
**96317 Kronach Neuses (DE)**

• **GULAGUNDI, Raghavendra**
**Kronach Neuses 96317 (DE)**
• **HAAG, Fabian**
**74321 Bietigheim-Bissingen (DE)**
• **HAFNER, Bastian**
**74321 Bietigheim-Bissingen (DE)**

(74) Vertreter: **Pothmann, Karsten**
**Valeo Schalter und Sensoren GmbH**
**CDA-IP**
**Laiernstraße 12**
**74321 Bietigheim-Bissingen (DE)**

(56) Entgegenhaltungen:
EP-A1- 2 899 563      DE-A1- 102012 216 968
DE-A1- 102017 105 043

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft ein Verfahren zum Bestimmen eines Zustands einer Membran eines Ultraschallsensors während eines Betriebs des Ultraschallsensors. Zudem betrifft diese Erfindung ein Analysesystem für ein Kraftfahrzeug, welches einen Ultraschallsensor aufweist, der eine Membran aufweist.

Ultraschallsensoren werden bei Kraftfahrzeugen häufig eingesetzt, um Informationen über eine Umgebung des Kraftfahrzeugs zu erhalten. Dabei werden Ultraschallwellen eingesetzt, welche häufig in unterschiedlicher Weise phasenmoduliert werden. Eine übliche Phasenmodulation stellt die binäre Phasenverschiebung dar. Dabei handelt es sich um eine Phasenverschiebung um 180 Grad. Da damit genau zwei Zustände codiert werden können, wird diese Phasenverschiebung oft als binäre Phasenverschiebung (BPSK) bezeichnet. Zu jedem Zeitpunkt während des Sendeprozesses wird dabei in aller Regel das gesamte Frequenzspektrum benutzt. Es ist daher nicht möglich, einen Zeitpunkt einer bestimmten Frequenz zuzuordnen, weil das Sendespektrum eine Mischung aus verschiedenen Frequenzen aufweist.

Viele Ultraschallsensoren weisen eine Membran auf. Ein Verhalten der Membran ist in der Regel stark von der Frequenz eines Anregungssignals abhängig. Dieses Membranverhalten wird ebenfalls stark von verschiedenen Zuständen der Membran beeinflusst. Diese Zustände können beispielsweise eine Bedeckung der Membran mit Eis oder mit Verunreinigungen sowie unterschiedliche Temperaturen der Membran sein. Häufig werden zusätzliche Sensoren eingesetzt, um das Membranverhalten der Membran im Ultraschallsensor genauer zu prognostizieren. Da diese zusätzlichen Sensoren meistens an einer anderen Stelle wie die Ultraschallsensoren montiert sind, ergibt sich der Nachteil, dass die Sensordaten örtlich auseinanderfallen können.

Die Offenlegungsschrift DE 10 2014 201 482 A1 beschreibt ein Verfahren und eine Vorrichtung zur Erkennung einer Fehlfunktion eines Ultraschallwandlers durch Auswerten einer Impedanz-Hüllkurve. Dabei wird der Ultraschallwandler mit einem Anregungssignal beaufschlagt und ein Impedanzsignal ermittelt, welches die Impedanz des Ultraschallwandlers beschreibt. Aus dem Impedanzsignal wird eine Impedanz-Hüllkurve erzeugt, welche mit einer Referenz-Hüllkurve verglichen wird. Eine Fehlfunktion wird detektiert, wenn die Impedanz-Hüllkurve nicht der Referenz-Hüllkurve entspricht.

Die Patentschrift DE 10 2009 040 992 B4 beschreibt ein Verfahren zur Vereisungs- und Verschmutzungserkennung von Ultraschallsensoren. Dabei wird eine Membran des Ultraschallsensors mittels Ultraschallwellen mit vorgegebener Anregefrequenz angeregt. Im Anschluss wird eine Ausschwingfrequenz an diese Anregung beobachtet. Mittels eines Vergleichs der Anregefrequenz mit der Ausschwingfrequenz wird auf eine Vereisung und/oder Verschmutzung der Membran geschlossen.

Aus der DE 10 2012 216968 A1 ist ein Verfahren im Bereich der Umfeldsensorik mittels Ultraschallwandlern bekannt, bei welchem eine Erkennung von Fehlfunktionen sowie eine Quantifizierung von Fehlfunktionen zur Anpassung einer Auswertung eines Ultraschallwandlers erfolgt.

Aus der DE 10 2017 105 043 ist ein Verfahren zum Bestimmen eines Funktionszustands eines Ultraschallsensors einer Ultraschallsensorvorrichtung für ein Kraftfahrzeug bekannt, welche zum Aussenden eines Ultraschallsignals in eine Umgebung des Kraftfahrzeugs und/oder zum Empfangen eines Echosignals des Ultraschallsignals ausgebildet ist, wobei ein elektrisches Prüfsignal (P) erzeugt wird.

Es ist Aufgabe der vorliegenden Erfindung, einen Zustand der Membran des Ultraschallsensors effizienter zu bestimmen.

Diese Aufgabe wird durch die unabhängigen Patentansprüche gelöst. Sinnvolle Weiterbildungen ergeben sich aus den Unteransprüchen.

Die Erfindung sieht ein Verfahren zum Bestimmen eines Zustands einer Membran eines Ultraschallsensors während eines Betriebs des Ultraschallsensors vor. Mit dem Begriff "Betrieb des Ultraschallsensors" ist insbesondere ein Sendebetrieb gemeint. Der Begriff "Betreiben des Ultraschallsensors" meint somit bevorzugt das Senden des Ultraschallsensors. Das aktive Aussenden von Ultraschallwellen durch den Ultraschallsensor ist mit dem Betrieb des Ultraschallsensors angesprochen. In vielen Fällen soll erkannt werden, ob der Ultraschallsensor beziehungsweise die Membran des Ultraschallsensors verschmutzt ist, oder mit Eis bedeckt ist. Solche Zustände werden häufig auch als blockierte Zustände bezeichnet. Dies bedeutet, dass die vorliegende Erfindung insbesondere dazu eingesetzt werden kann, blockierte Zustände einer Membran eines Ultraschallsensors zu erkennen.

Im Idealfall sollen diese Zustände nicht nur erkannt werden, sondern darüber hinaus quantitativ bestimmt werden. Zunächst wird in einem Schritt a) die Membran des Ultraschallsensors mit einem ersten Anregungssignal in einem vorgegebenen ersten Frequenzverlauf beaufschlagt. Der vorgegebene erste Frequenzverlauf ist in aller Regel nicht konstant. Jedoch ist bei dem ersten Anregungssignal insbesondere zu jedem Zeitpunkt die jeweilige Frequenz des ersten Anregungssignals festgelegt. Beispielsweise kann der erste Frequenzverlauf bei einer hohen Frequenz starten und bei einer niedrigeren Frequenz enden. Wird dieser Frequenzbereich gleichmäßig oder linear durchlaufen, so kann von einem down-chirp Signal gesprochen werden. Vorzugsweise wird bei dem ersten Anregungssignal ein Frequenzverlauf gewählt, der monoton steigt beziehungsweise monoton fällt. Dies bedeutet, dass der erste Frequenzverlauf des ersten Anregungssignals vorzugsweise lediglich eine Frequenzänderung nur in eine Richtung aufweist. Idealerweise beinhaltet das erste Anregungssignal somit keine Änderung der Richtung der Frequenzänderung. Dies wäre zum Beispiel ein Frequenzverlauf, der zunächst ansteigt und später im weiteren Verlauf wieder abfällt.

In einem Schritt b) wird ein erster Spannungsverlauf in Abhängigkeit von einer Frequenz des ersten Anregungssignals gemessen, der durch das erste Anregungssignal hervorgerufen wird. In der Regel versetzt das erste Anregungssignal die Membran des Ultraschallsensors in Schwingungen. Diese Schwingungen der Membran können durch einen entsprechenden Spannungsabfall oder eine induzierte Spannung registriert werden. Da zu jedem Zeitpunkt eine unterschiedliche Spannung gemessen werden kann, ergibt sich beim Messen der Spannungssignale der erste Spannungsverlauf. Somit entspricht der erste Spannungsverlauf insbesondere vielen einzelnen Spannungsmessungen zu unterschiedlichen Zeitpunkten. Somit wird in Schritt b) insbesondere die Reaktion der Membran aufgrund der Beaufschlagung durch das erste Anregungssignal gemessen. Die Reaktion der Membran auf diese Beaufschlagung durch das erste Anregungssignal kann durch den ersten Spannungsverlauf ausgedrückt werden. Somit kann der erste Spannungsverlauf als Indikator für das Reaktionsverhalten der Membran verwendet werden.

In einem Schritt c) wird die Membran des Ultraschallsensors mit einem zweiten Anregungssignal beaufschlagt, das einen vom ersten Frequenzverlauf unterschiedlichen zweiten Frequenzverlauf besitzt. Der erste Frequenzverlauf ist somit vom zweiten Frequenzverlauf unterschiedlich. Die Ausführungen bezüglich des Schritts a) gelten sinngemäß für den Schritt c). Vorzugsweise unterscheidet sich das erste Anregungssignal vom zweiten Anregungssignal. Ein erster Frequenzbereich kann mit einem zweiten Frequenzbereich übereinstimmen. Der Frequenzbereich wird in der Regel durch eine minimale Frequenz und eine maximale Frequenz bestimmt. Jedoch ist es insbesondere möglich, dass ein Frequenzbereich unterschiedlich durchlaufen wird. So kann beispielsweise der erste Frequenzverlauf einen abfallenden Frequenzverlauf darstellen und der zweite Frequenzverlauf kann einen ansteigenden Frequenzverlauf darstellen. Dies ist insbesondere bei Chirp-Signalen der Fall. Ein Chirp-Signal ist eine Bezeichnung aus der Signalverarbeitungstechnik. Das Chirp-Signal beschreibt in der Regel ein Signal, dessen Frequenz sich zeitlich ändert. Dabei kann zwischen positiven Chirp-Signalen und negativen Chirp-Signalen unterschieden werden. Bei positiven Chirp-Signalen nimmt die Frequenz des Signals zeitlich zu, bei negativen Chirp-Signalen nimmt die Frequenz des Signals zeitlich ab. Die Frequenzzunahme beziehungsweise Frequenzabnahme kann linear oder exponentiell ausgebildet sein. Ein positives Chirp-Signal, bei dem die Frequenz zeitlich stets zunimmt, wird oft auch als up-chirp bezeichnet. Entsprechend wird ein negatives Chirp-Signal, dessen Frequenzverlauf stetig abnimmt, als down-chirp bezeichnet. Bevorzugt ist das up-chirp Signal entsprechend zum down-chirp Signal gegensätzlich ausgeführt. Insbesondere weisen das up-chirp Signal dieselben Frequenzpunkte auf wie das entsprechende down-chirp Signal. Insbesondere kann das up-chirp Signal zum down-chirp Signal punktsymmetrisch ausgeführt sein. In diesem Fall würde das up-chirp Signal von einer niedrigen Frequenz zu einer höheren Frequenz verlaufen. Das entsprechende down-chirp Signal könnte demnach von derselben höheren Frequenz zu derselben niedrigeren Frequenz verlaufen. Der jeweilige Frequenzverlauf ähnelt dabei insbesondere dem des entsprechenden up- oder down-chirp Signals, wobei die unterschiedliche Frequenzänderung zu berücksichtigen ist.

Insbesondere unterscheidet sich der erste Frequenzverlauf des ersten Anregungssignals vom zweiten Frequenzverlauf des zweiten Anregungssignals. Bevorzugt werden die beiden Anregungssignale zu unterschiedlichen Zeitpunkten eingesetzt. Dies bedeutet, dass die Membran des Ultraschallsensors vorzugsweise nicht gleichzeitig mit dem ersten und zweiten Anregungssignal beaufschlagt wird. Das erste Anregungssignal ist idealerweise zum zweiten Anregungssignal zeitlich verschoben. Bevorzugt weisen die beiden Anregungssignale darüber hinausgehende weitere Unterschiede auf. Vor allem unterschiedliche Frequenzverläufe sind damit angesprochen.

Anstelle des Begriffs von Chirp-Signalen wird in der Literatur oft auch der Begriff des "Sweeps" verwendet. Ein Sweep kann ein Signal mit konstanter Amplitude sein, deren Frequenz periodisch und stetig einen vorgegebenen Bereich durchläuft. Im Gegensatz zu einem up-chirp Signal beziehungsweise einem down-chirp Signal kann bei einem Sweep-Signal eine Richtungsänderung der Frequenzänderung erfolgen. So ist es beispielsweise möglich, dass bei einem Sweep-Signal in einem vorgegebenen Teilbereich die Frequenz zunimmt und in einem anderen vorgegebenen Teilbereich die Frequenz des Anregungssignals abnimmt. Das Anregungssignal kann somit unterschiedlich ausgebildet sein. Es kann in Form eines Sweep-Signals, up-chirp Signals, down-chirp-Signals oder im einfachsten Fall als konstantes Anregungssignal vorliegen. Vorzugsweise werden im Rahmen dieser Erfindung up-chirp Signale beziehungsweise down-chirp Signale eingesetzt.

Das erste beziehungsweise zweite Anregungssignal kann ein frequenzmoduliertes Signal sein. Die beiden Anregungssignale können periodisch oder sinusförmig ausgestaltet sein. Der erste Frequenzverlauf ist gegenüber dem zweiten Frequenzverlauf nicht identisch. So kann zum Beispiel das erste Anregungssignal als Stufenfunktion ausgebildet sein. Jede Stufe kann eine andere Frequenz darstellen. Die Stufenfunktion kann ansteigend, absteigend oder als eine Kombination dieser beiden Möglichkeiten ausgeführt sein. Der Frequenzverlauf betreffend das erste Anregungssignal kann linear, quadratisch und/oder exponentiell ausgebildet sein. Ist beispielsweise das erste Anregungssignal als up-chirp ausgebildet, so steigt die Frequenz des ersten Anregungssignals mit der Zeit an. Jedoch kann dieser Anstieg unterschiedlich ausgeführt sein. Er kann linear, quadratisch, exponentiell und/oder in sonstiger Weise ansteigend ausgebildet sein. Entsprechendes gilt bei einem down-chirp Signal. Jedoch ist es möglich, dass das erste Anregungssignal nicht als reines up-chirp oder down-chirp Signal ausgebildet ist. In diesem Fall kann die Frequenz des ersten Anregungssignals in einem vorgegebenen ersten Zeitintervall zeitlich zunehmen. In einem anderen vorgegebenen zweiten Zeitintervall kann die Frequenz des ersten Anregungssignals abnehmen. So kann beispielsweise das erste Anregungssignal eine Folge von ansteigenden und abfallenden Frequenzbereichen aufweisen. Somit kann ein derartiges erstes Anregungssignal eine dreiecksförmige Anregung ermöglichen. Im einfachsten Fall kann das erste Anregungssignal ein Signal mit einer konstanten Frequenz sein. Bevorzugt werden up-chirp beziehungsweise down-chirp Signale als erstes beziehungsweise zweites Anregungssignal eingesetzt. Die in diesem Absatz erwähnten Ausführungen zum ersten Anregungssignal gelten sinngemäß für das zweite Anregungssignal.

In einem Schritt d) wird ein zweiter Spannungsverlauf in Abhängigkeit von einer Frequenz des zweiten Anregungssignals gemessen, wobei der zweite Spannungsverlauf durch das zweite Anregungssignal hervorgerufen wird. Ebenso gilt hier bei Schritt d) sinngemäß dasselbe wie bei Schritt b). Somit liegen nach Ausführung des Schritts b) in der Regel zwei unterschiedliche Spannungsverläufe vor. Diese beiden Spannungsverläufe werden im weiteren Verlauf ausgewertet, um den Zustand der Membran zu bestimmen.

Dazu wird in einem Schritt e) der erste Spannungsverlauf um einen Betrag in eine erste Richtung verschoben. Ebenso wird der zweite Spannungsverlauf um denselben Betrag in eine zweite Richtung verschoben, sodass jeweilige Positionen von Maxima der beiden Spannungsverläufe in einem vorgegebenen Frequenzbereich aneinander angeglichen werden. Dabei bedeutet der Begriff "angeglichen" nicht zwangsläufig, dass die beiden Maxima exakt übereinstimmen beziehungsweise zusammenfallen müssen. Es reicht aus, wenn nach dem Angleichen in Schritt e) eine Distanz der Maxima einen vorgegebenen Toleranzwert nicht überschreitet. Der Abstand der beiden Maxima kann insbesondere in Form eines euklidischen Abstands ausgedrückt werden. Durch das Verschieben des ersten Spannungsverlaufs sowie des zweiten Spannungsverlaufs wird somit in Schritt e) erreicht, dass das erste Maximum des ersten Spannungsverlaufs im ersten vorgegebenen Frequenzbereich an das zweite Maximum des zweiten Spannungsverlaufs im zweiten vorgegebenen Frequenzbereich aneinander angeglichen werden. Diese beiden Maxima werden insbesondere durch den Schritt e) einander angenähert. Im Idealfall ergibt diese Angleichung ein Verschmelzen der beiden Maxima zu einem einzigen Punkt.

In einem Schritt f) wird ein dritter Spannungsverlauf ermittelt, der zwischen dem verschobenen ersten Spannungsverlauf und dem verschobenen zweiten Spannungsverlauf aus Schritt e) verläuft. Dabei sind mit dem ersten und zweiten Spannungsverlauf ab Schritt f) bevorzugt diejenigen Spannungsverläufe angesprochen, die sich durch das Verschieben in Schritt e) ergeben. Der verschobene erste Spannungsverlauf ergibt sich vorzugsweise aus dem ersten Spannungsverlauf, der um den Betrag in die erste Richtung verschoben wird. Erläuterungen zu Spannungsverläufen, die sich auf den Schritt f) beziehen, meinen die verschobenen Spannungsverläufe, die sich aus Schritt e) ergeben. Analog ergibt sich insbesondere der zweite verschobene Spannungsverlauf durch ein Verschieben beziehungsweise eine Translation des zweiten Spannungsverlaufs um denselben Betrag in die zweite Richtung. Dabei kann insbesondere vorgesehen sein, dass die beiden verschobenen Spannungsverläufe unterschiedlich gewichtet werden können. Dies kann beispielsweise durch unterschiedliche Gewichtungsfaktoren erreicht werden. In der Regel ist es dabei nicht wichtig, ob der Gewichtungsfaktor vor oder nach dem Verschieben der Spannungsverläufe eingesetzt wird. Soll beispielsweise der erste Spannungsverlauf stärker gewichtet werden als der zweite Spannungsverlauf, so könnte für den ersten Spannungsverlauf ein größerer Gewichtungsfaktor gewählt werden als für den zweiten Spannungsverlauf. Im Idealfall addieren sich beide Gewichtungsfaktoren für die beiden Spannungsverläufe zu 100 Prozent. Insbesondere kann vorgesehen sein, dass der dritte Spannungsverlauf einem Median bezüglich des ersten und zweiten Spannungsverlaufs (verschobener Spannungsverlauf) entspricht.

In einem Schritt g) wird der Zustand der Membran unter Verwendung des dritten Spannungsverlaufs bestimmt. Dies geschieht beispielsweise durch Ermitteln von mindestens einem elektrischen Parameter eines Modells zur kontinuierlichen Anregung der Membran. Darüber hinaus wird der mindestens eine elektrische Parameter mit mindestens einem vorgegebenen Referenzparameter verglichen. Als elektrischer Parameter kann beispielsweise ein effektiver Widerstand, eine effektive Kapazität oder eine effektive Induktivität in Betracht kommen. Das Membranverhalten wird in Schritt g) mittels des Modells zur kontinuierlichen Anregung der Membran beschrieben. Dieses Modell geht insbesondere davon aus, dass die Membran mit einem Anregungssignal von konstanter Frequenz angeregt wird. Dieses Modell kann anhand eines Ersatzschaltbildes beschrieben werden. In vielen Fällen ist es ausreichend, wenn nur ein Parameter mit seinem dazugehörigen Referenzparameter verglichen wird. In der Regel ist dies derjenige Parameter, welcher die größte Abweichung zu seinem vorgegebenen Referenzparameter aufweist. Der vorgegebene Referenzparameter beschreibt dabei insbesondere einen vorgegebenen Zustand der Membran. Diese Referenzparameter werden vorzugsweise durch Referenzmessungen gewonnen. Dabei werden diese Referenzmessungen insbesondere mit jenen Zuständen der Membran durchgeführt, welche später im Rahmen dieses Verfahrens bestimmt werden sollen. So kann beispielsweise eine Referenzmessung durchgeführt worden sein, bei der die Membran mit Eis bedeckt war.

Die so gewonnenen Referenzparameter können in Schritt g) verwendet werden, um den Zustand der Membran zu bestimmen. Andere Referenzmessungen können beispielsweise blockierte Zustände der Membran umfassen. So können Referenzmessungen im Vorfeld durchgeführt worden sein, bei denen die Membran einen vorgegebenen Verschmutzungsgrad aufwies. Die so gewonnenen Referenzparameter können in Schritt g) dazu verwendet werden zu bestimmen, ob die Membran verschmutzt ist. Im Idealfall kann durch das Vergleichen in Schritt g) nicht nur die Verschmutzung an sich, sondern darüber hinaus zusätzlich ein Verschmutzungsgrad ermittelt werden. Dies bedeutet, dass in Schritt g) das Bestimmen des Zustands der Membran quantitativ erfolgen kann. Somit ist es möglich, in Schritt g) nicht nur binäre Unterscheidungen festzustellen, sondern die Zustände der Membran quantitativ festzustellen. Dieses Verfahren kann separat für jeden einzelnen Ultraschallsensor angewendet werden. Somit kann sicher und zuverlässig erkannt werden, welcher Ultraschallsensor beschädigt ist oder momentan außer Betrieb ist.

Zudem kann die Art der Beschädigung festgestellt werden. Wird beispielsweise erkannt, dass die Membran mit Eis bedeckt ist, so ist in diesem Fall absehbar, dass der Ultraschallsensor in Zukunft bei höheren Temperaturen wieder in Betrieb genommen werden kann. Ergibt jedoch der Vergleich in Schritt g), dass die Membran beschädigt beziehungsweise gebrochen ist, so ist klar, dass dieser betreffende Sensor dauerhaft nicht mehr zur Verfügung steht. Im Idealfall kann der Zustand der Membran derart genau bestimmt werden, dass auch eine Ausfallprognose des betreffenden Ultraschallsensors möglich wird. Somit kann schnell erkannt werden, welcher Ultraschallsensor ausgetauscht werden muss beziehungsweise welche und wie viele Ultraschallsensoren in Zukunft ausgetauscht werden müssen.

Eine weitere Ausführungsform des Verfahrens sieht vor, dass das erste Anregungssignal als down-chirp Signal und das zweite Anregungssignal als up-chirp Signal ausgebildet ist. Als Chirp-Signal wird ein Signal bezeichnet, dessen Frequenz sich zeitlich ändert. Bei einem up-chirp nimmt die Frequenz zeitlich zu. Bei einem down-chirp nimmt die Frequenz im Verlauf der Zeit ab. Das erste Anregungssignal ist insbesondere ein elektrisches Signal. Theoretisch kann das erste Anregungssignal auch ein akustisches Signal sein. In der Regel wird jedoch ein Ultraschallsensor beziehungsweise dessen Membran mit elektrischen Signalen gesteuert. Dazu kann beispielsweise ein Aktor auf Basis der Piezo-Technologie eingesetzt werden. Das Piezoelement ist häufig integraler Bestandteil des Schallwandlerelements und wird damit ebenfalls der Diagnose unterzogen. Dies bedeutet, dass in den meisten Fällen die Membran nicht isoliert betrachtet wird. Dazugehörige Komponenten wie zum Beispiel das Piezoelement werden meistens ebenfalls von der Analyse erfasst. Das Piezoelement kann als Bestandteil verstanden werden, welches zur Membran gehört. Eine Veränderung des Zustands des Piezoelements kann ebenso beim Bestimmen des Zustands der Membran umfassen. In den meisten Fällen kann das Piezoelement nicht als externe Anregungsquelle betrachtet werden. Mittels elektrischer Signale kann ein Piezo-Element die Membran anregen. Es werden bevorzugt elektrische Signale als Anregungssignale verwendet. Dasselbe gilt für das zweite Anregungssignal. Ein up-chirp Signal ist meistens ein Signal, dessen Frequenz mit der Zeit zunimmt. Die Zunahme dieser Frequenz kann dabei unterschiedlich ausgestaltet sein. So kann beispielsweise die Frequenz mit der Zeit monoton ansteigen. Sie kann anstelle dessen exponentiell ansteigen. Auch eine Kombination unterschiedlicher Anstiegsarten, also eine Mischung aus exponentiellem und linearem Anstieg, ist möglich. Mit anderen Worten beträgt die zeitliche erste Ableitung des Frequenzverlaufs beim up-chirp Signal vorzugsweise stets größer Null. Bei einem down-chirp Signal ist die erste Ableitung vorzugsweise stets kleiner Null. Das Verhalten der Membran hängt insbesondere von einer Chirp-Richtung ab. Die Chirp-Richtung bedeutet dabei insbesondere ein Vorzeichen der ersten Ableitung des Frequenzverlaufs. Somit gibt die Chirp-Richtung an, ob die Frequenz des Chirp-Signals zeitlich zu- oder abnimmt. Da das Ausschwingverhalten der Membran von der Chirp-Richtung abhängt, werden bevorzugt ein up-chirp Signal und ein down-chirp Signal eingesetzt. Somit kann erreicht werden, dass das unterschiedliche Ausschwingverhalten der Membran bei der Bestimmung des Zustands der Membran berücksichtigt werden kann. Dies ermöglicht eine präzisere Analyse des Zustands der Membran.

Eine erfindungsgemäße Alternative sieht vor, dass der Zustand der Membran zusätzlich oder alternativ anhand eines Vergleichs einer Resonanzfrequenz des dritten Spannungsverlaufs als der mindestens eine Parameter mit einer vorgegebenen Resonanzfrequenz als der vorgegebene Referenzparameter bestimmt wird. Diese Variante sieht somit vor, dass anstelle der Ermittlung von mindestens einem elektrischen Parameter des Modells zur kontinuierlichen Anregung die Resonanzfrequenz des dritten Spannungsverlaufs mit der vorgegebenen Referenzresonanzfrequenz verglichen wird. Anhand dieses Vergleichs kann der Zustand der Membran bestimmt werden. Dabei repräsentiert die vorgegebene Resonanzfrequenz einen vorgegebenen Zustand der Membran. Weicht die ermittelte Resonanzfrequenz von dieser vorgegebenen Resonanzfrequenz ab, so kann darauf basierend der Zustand der Membran abgeleitet werden. Bevorzugt kann aus dem Grad der Abweichung sogar ein quantitativer Zustand der Membran bestimmt werden. So ist es beispielsweise möglich, dass bei einer Bedeckung mit Eis ermittelt werden kann, wie viel Eis auf der Membran vorhanden ist. Die Resonanzfrequenz ist insbesondere durch ein Minimum des dritten Spannungsverlaufs in einem vorgegebenen Frequenzbereich definiert.

Eine weitere Variante dieser Erfindung sieht vor, dass das Modell zur kontinuierlichen Anregung der Membran einen ersten Widerstand, eine erste Induktivität und eine erste Kapazität in einer Parallelschaltung sowie einen zweiten Widerstand, eine zweite Induktivität und eine zweite Kapazität in einer Reihenschaltung als die elektrischen Parameter des Modells aufweist. Dabei wird insbesondere folgende Formel verwendet:

$$Z = \left[ \frac{1}{i \cdot w \cdot L_P} + \frac{1}{R_P} + i \cdot w \cdot C_P + \frac{1}{i \cdot w \cdot L_S + \frac{1}{i \cdot w \cdot C_S} + R_S} \right]^{-1} \quad [1]$$

In der Formel 1 stellt i die komplexe Einheit dar. Hier ist mit Z eine Impedanz der Membran gemeint. *w* repräsentiert die Kreisfrequenz des dritten Spannungsverlaufs. $R_p$ repräsentiert den ersten Widerstand, $L_p$ repräsentiert die erste Induktivität, und die erste Kapazität wird durch die Variable $C_p$ dargestellt. Diese Parameter können in einem Ersatzschaltbild als Elemente einer Parallelschaltung aufgefasst werden. Der Parameter $R_s$ repräsentiert den zweiten Widerstand, $L_s$ repräsentiert die zweite Induktivität und $C_s$ stellt die zweite Kapazität dar. Diese Parameter sind bevorzugt in einem Ersatzschaltbild in der Reihenschaltung zusammengefasst. Somit beinhaltet die Formel 1 genau sechs elektrische Parameter. Diese elektrischen Parameter können im weiteren Verlauf mit anderen vorgegebenen Referenzparametern verglichen werden. Dabei kann insbesondere vorgesehen sein, dass ein euklidischer Abstand von den sechs elektrischen Parametern zu weiteren sechs vorgegebenen elektrischen Parametern ermittelt wird. Dieser euklidische Abstand kann im weiteren Verlauf als Zustandsgröße zur Bestimmung des Zustands der Membran verwendet werden. Insbesondere kann dabei untersucht werden, ob der euklidische Abstand von den elektrischen Parametern zu den vorgegebenen elektrischen Parametern einen vorgegebenen Toleranzwert über- oder unterschreitet. Überschreitet der Abstand den Toleranzwert, so kann ein blockierter Zustand der Membran erkannt werden. Mit Hilfe der elektrischen Parameter ist auch möglich, eine Temperatur der Membran zu ermitteln.

Eine weitere Variante dieser Erfindung sieht vor, dass für vorgegebene Zustände der Membran Referenzparameter vorgegeben sind und derjenige genau eine elektrische Parameter des Modells mit dem dazugehörigen Referenzparameter verglichen wird, der die größte Abweichung zu seinem zugehörigen Referenzparameter aufweist, um den Zustand der Membran zu bestimmen. In diesem Fall wird nur ein einziger elektrischer Parameter mit genau einem dazugehörigen Referenzparameter verglichen. Dabei wird genau der elektrische Parameter zum Vergleich herangezogen, der gegenüber seinem dazugehörigen Referenzparameter die größte Abweichung beziehungsweise den größten Abstand aufweist. Dies kann das Verfahren beschleunigen, da der Vergleichsprozess vereinfacht wird. Dies kann beispielsweise dann sinnvoll sein, wenn bestimmte vorgegebene Zustände untersucht werden sollen. Soll beispielsweise der Ultraschallsensor lediglich auf eine Bedeckung mit Eis untersucht werden, so ist es möglich, dass dabei nur bestimmte oder nur genau ein elektrischer Parameter des Modells betroffen ist. In diesem Fall reicht es aus, sich lediglich auf den betreffenden elektrischen Parameter zu konzentrieren. Infolgedessen kann der Vergleich auf diesen einen elektrischen Parameter eingeschränkt werden. Eine Analyse von Ultraschallsensoren zum Bestimmen von deren Zuständen kann vereinfacht und beschleunigt werden.

Eine weitere Variante dieser Erfindung sieht vor, dass die vorgegebenen Zustände der Membran eine Bedeckung der Membran mit Eis oder einer Verunreinigung bedeuten. In diesem Fall sind die vorgegebenen Zustände definiert. Sie sind insbesondere bereits im Vorfeld definiert beziehungsweise festgelegt worden. Dies bedeutet insbesondere, dass zu diesen definierten Zuständen Referenzdaten beziehungsweise Referenzmessungen existieren. Anhand dieser Referenzmessungen beziehungsweise Referenzparameter kann ein Vergleich mit den ermittelten elektrischen Parametern aus Schritt g) erfolgen. Dies bedeutet beispielsweise, dass zu unterschiedlichen Bedeckungsgraden der Membran mit Eis mehrere Referenzparameter vorliegen können. Werden in Schritt g) elektrische Parameter ermittelt, so können diese mit den bereits vorhandenen vorgegebenen Referenzparametern verglichen werden. Dieser Vergleich ermöglicht es zu bestimmen, ob die Membran mit Eis bedeckt ist. Liegen mehrere Referenzparameter zu unterschiedlichen Bedeckungsgraden mit Eis vor, so kann sogar ermittelt werden, wie stark die Membran vereist ist. Eine analoge Vorgehensweise ist auch hinsichtlich einer Membran mit Verunreinigungen möglich. So kann nicht nur angegeben werden, ob die Membran verunreinigt ist, sondern sogar, wie stark die Membran verunreinigt ist. Es kann somit ein Verschmutzungsgrad ermittelt werden. Ebenso kann analog ein Bedeckungsgrad der Membran mit Eis ermittelt werden.

Eine weitere Variante der Erfindung sieht vor, dass die vorgegebenen Zustände der Membran eine Temperatur der Membran bedeuten. Anstelle der Analyse von blockierten Zuständen der Membran kann diese Variante vorsehen, dass eine Temperatur der Membran ermittelt wird. Wird beispielsweise der Ultraschallsensor außerhalb seines zulässigen Temperaturbereichs betrieben, so können dessen Messergebnisse als unsicher eingestuft werden. Mittels einer entsprechenden Warnmeldung an einen Fahrer kann dieser auf unzuverlässige Messungen des Ultraschallsensors hingewiesen werden.

Eine weitere Variante dieser Erfindung sieht vor, dass anhand des mindestens einen ermittelten elektrischen Parameters ein Bedeckungsgrad und/oder ein Verschmutzungsgrad der Membran zu einem quantitativen Bestimmen des Zustands der Membran ermittelt werden. Dies gelingt insbesondere dadurch, dass mehrere Referenzparameter zu mehreren vorgegebenen Zuständen vorliegen können. Somit kann in Schritt g) nicht nur ermittelt werden, ob die Membran verunreinigt, beschädigt oder mit Eis bedeckt ist, sondern zusätzlich das Ausmaß der Beschädigung beziehungsweise Verunreinigung ermittelt werden. Im Falle einer Bedeckung der Membran mit Eis kann somit angegeben werden, wie dick die Eisschicht auf der Membran ist. Ebenso kann bestimmt werden, wie dick eine Schicht aus Verunreinigungen auf der Membran ist. Unter Umständen kann sogar ein Profil einer Eisschicht auf der Membran ermittelt werden.

Eine weitere Variante dieser Erfindung sieht vor, dass im Falle einer beschädigten oder verschmutzten Membran ein Warnsignal erzeugt wird. Ist die Membran des Ultraschallsensors beschädigt oder verschmutzt, so ist in der Regel der Ultraschallsensor in seiner Funktion beeinträchtigt. Dies bedeutet, dass dessen Messungen beziehungsweise Messergebnisse unzuverlässig sein können. In diesem Fall ist es sinnvoll, dass ein Fahrer eines Kraftfahrzeugs vor unzuverlässigen Ultraschallsensoren gewarnt wird. Das Warnsignal kann optisch, haptisch und/oder akustisch ausgebildet sein. Dem Fahrer des Kraftfahrzeugs kann so angezeigt werden, welche Ultraschallsensoren nicht korrekt funktionieren beziehungsweise welche Ultraschallsensoren ausgefallen sind und ersetzt werden sollen. Dies kann einen schnelleren Reparaturservice ermöglichen, da nicht nach defekten Ultraschallsensoren gesucht werden muss.

Eine weitere Variante dieser Erfindung sieht vor, dass der dritte Spannungsverlauf in Schritt f) durch Mittelwertbildung des ersten und zweiten Spannungsverlaufs ermittelt wird. Dabei wird bevorzugt die Mittelwertbildung anhand der verschobenen Spannungsverläufe aus Schritt e) durchgeführt. Dies bedeutet, dass in Schritt f) vor allem die jeweiligen Spannungsverläufe gemeint sind, die sich durch das Verschieben des ersten und zweiten Spannungsverlaufs ergeben. Der dritte Spannungsverlauf verläuft bevorzugt zwischen dem verschobenen ersten und dem verschobenen zweiten Spannungsverlauf. In dieser Variante ist jedoch vorgesehen, dass der Spannungsverlauf genau mittig zwischen den beiden verschobenen Spannungsverläufen platziert ist. So kann erreicht werden, dass das up-chirp Signal sowie das down-chirp Signal gleich stark gewichtet werden. Es ist jedoch auch möglich, diese beiden unterschiedlichen Anregungssignale gezielt durch unterschiedliche Gewichtungsfaktoren unterschiedlich zu gewichten. Somit umfasst diese Variante auch eine Mittelwertbildung, welche Gewichtungsfaktoren aufweist. Dabei ist jedoch bevorzugt vorgesehen, dass kein Gewichtungsfaktor den Wert Null annimmt.

Erfindungsgemäß ist vorgesehen, dass in Schritt e) die erste Richtung zur zweiten Richtung beim Verschieben der Spannungsverläufe entgegengesetzt ist. Die erste Richtung ist insbesondere zur zweiten Richtung diametral ausgebildet. Die erste Richtung kann durch eine Drehung von 180 Grad in die zweite Richtung umgewandelt werden. Insbesondere können die erste und zweite Richtung horizontal ausgebildet sein. Somit kann sichergestellt werden, dass im weiteren Verlauf des Verfahrens keine Frequenzverfälschung stattfindet. Es kann somit ein zuverlässigeres Bestimmen des Zustands des Ultraschallsensors ermöglicht werden.

Die vorliegende Erfindung stellt ebenfalls ein Analysesystem für ein Kraftfahrzeug bereit. Dieses Analysesystem weist einen Ultraschallsensor auf, der eine Membran aufweist. Das Analysesystem beinhaltet zudem eine Signalerzeugungseinheit zum Erzeugen eines ersten Anregungssignals und eines zweiten Anregungssignals zum Anregen der Membran des Ultraschallsensors. Des Weiteren weist das Analysesystem eine Auswerteeinheit auf, welche ausgebildet ist, ein Verfahren nach einem der vorherigen Varianten oder Beispiels auszuführen. Die bisher beschriebenen und genannten Varianten, Beispiele und Vorteile gelten sinngemäß auch für das Analysesystem.

Eine weitere Ausführungsform sieht ein Analysesystem vor, wobei das erste Anregungssignal als down-chirp Signal und das zweite Anregungssignal als up-chirp Signal ausgebildet sind. Die genannten Beispiele und Definitionen zu dem down-chirp-Signal und dem up-chirp Signal gelten sinngemäß für diese Variante der Erfindung. Diese beiden Anregungssignale werden bevorzugt durch die Signalerzeugungseinheit erzeugt. Damit kann die Membran des Ultraschallsensors unterschiedlich angeregt werden. Je nachdem welches chirp-Signal verwendet wird, kann ein unterschiedlicher Zustand der Membran detektiert werden. Zum Beispiel kann ein bestimmtes chirp-Signal für eine Temperaturanalyse der Membran vorgesehen sein. Somit lassen sich bestimmte Zustände der Membran gezielt untersuchen. Ein bedarfsgerechtes Analysesystem für die Membran kann so geschaffen und genutzt werden.

Eine weitere Variante dieser Erfindung sieht ein Fahrzeugassistenzsystem mit einem Analysesystem vor. Damit können innerhalb des Fahrzeugassistenzsystems die jeweiligen Zustände der Ultraschallsensoren ermittelt werden. Diese Informationen können innerhalb des Fahrzeugassistenzsystems zusammen mit anderen weiteren Informationen von anderen Analysesystemen gebündelt werden. Somit kann das Analysesystem wichtige Informationen betreffend die Zustände der Ultraschallsensoren ermitteln und dem Fahrzeugassistenzsystem bereitstellen.

Im Rahmen dieser Erfindung wird ebenfalls ein Kraftfahrzeug mit einem Fahrzeugassistenzsystem vorgeschlagen. Anhand der Kenntnis der Zustände der jeweiligen Ultraschallsensoren kann der Betrieb des Kraftfahrzeugs sicherer und effizienter ausgestaltet werden.

Diese Erfindung schlägt ebenfalls ein Computerprogrammprodukt mit Programmcodemitteln vor, welche in einem computerlesbaren Medium gespeichert sind, um das Verfahren nach einem der vorherigen Varianten durchzuführen, wenn das Computerprogrammprodukt auf einem Prozessor einer elektronischen Auswerteeinheit abgearbeitet wird. Das Computerprogrammprodukt kann in der Bordelektronik eines Kraftfahrzeugs integriert sein. Somit ist es nicht zwingend erforderlich, für eine Zustandsbestimmung der Membran eigene digitale Ressourcen bereitzustellen.

Die Signalerzeugungseinheit kann als Piezo-Aktor oder Piezo-Element ausgeführt sein. In der Regel ist das erste Anregungssignal zu dem zweiten Anregungssignal unterschiedlich ausgestaltet. Insbesondere kann die Frequenz des ersten Anregungssignals mit der Frequenz des zweiten Anregungssignals unterschiedlich sein. Dies kann ebenfalls auf die Amplitude oder Phase zutreffen. So kann das erste Anregungssignal einen anderen Amplitudenverlauf als das zweite Anregungssignal aufweisen. Dasselbe kann auch für die Phase zutreffen. Diese Erfindung sieht insbesondere vor, dass die Membran mit Anregungssignalen angeregt wird, deren Frequenz zeitlich nicht konstant ist. Im weiteren Verlauf des Verfahrens wird jedoch bevorzugt auf ein sogenanntes Constant-Wave-Model zurückgegriffen. Das Constant-Wave-Model entspricht dabei dem Modell zur kontinuierlichen Anregung der Membran.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind.

Dabei zeigt:

Fig. 1    ein Kraftfahrzeug mit einem Analysesystem;

Fig. 2    eine schematische Zeichnung eines Ultraschallsensors mit einer Membran;

Fig. 3    ein Diagramm mit einem ersten Spannungsverlauf und einem zweiten Spannungsverlauf sowie ansatzweise korrespondierende verschobene Spannungsverläufe;

Fig. 4    ein Diagramm mit einem dritten Spannungsverlauf; und

Fig. 5    ein beispielhaftes Ablaufdiagramm zur besseren Darstellung von Verfahrensschritten;

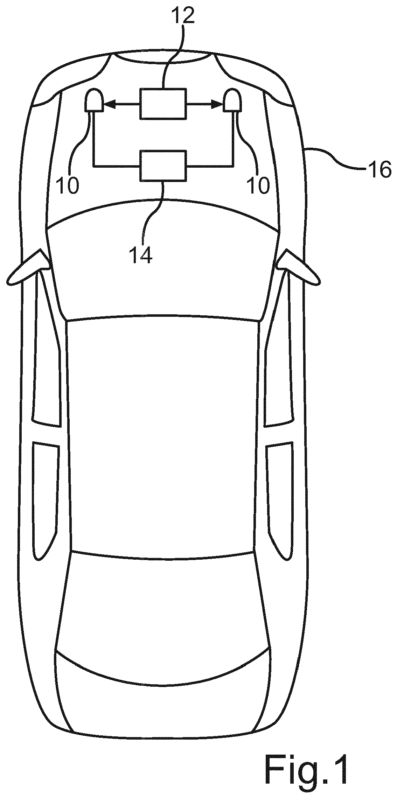

Fig. 1 zeigt ein Kraftfahrzeug 16 welches ein Analysesystem aufweist. Dieses Analysesystem weist mehrere Komponenten auf. Dazu gehören ein Ultraschallsensor 10, eine Auswerteeinheit 14 sowie eine Signalerzeugungseinheit 12. Das Kraftfahrzeug 16 kann insbesondere als Personenkraftwagen ausgebildet sein. Die Ultraschallsensoren 10 können nicht nur, wie gezeigt, im Frontbereich des Kraftfahrzeugs 16, sondern ebenfalls im rückwärtigen Bereich (Kofferraum) des Kraftfahrzeugs 16 angeordnet sein. Die Ultraschallsensoren 10 können insbesondere als Parksensoren ausgebildet sein. Solche Parksensoren werden bevorzugt zum sicheren Einparken des Kraftfahrzeugs 16 eingesetzt.

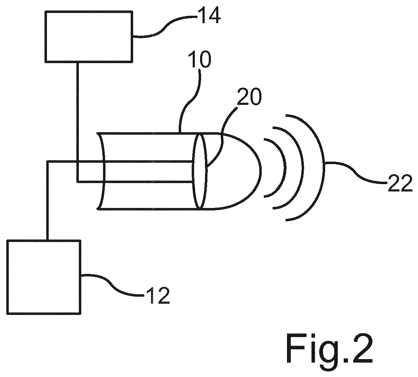

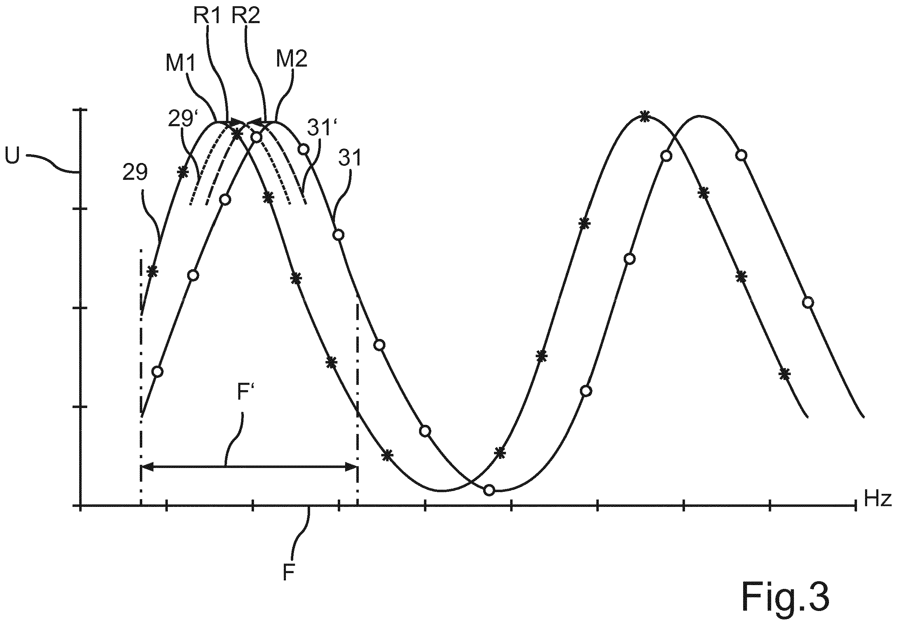

Fig. 2 zeigt den Ultraschallsensor 10 schematisch in einer größeren Darstellung. Der Ultraschallsensor 10 ist insbesondere dazu ausgebildet, Ultraschallwellen 22 auszusenden. Diese Ultraschallwellen 22 sind in Fig. 2 schematisch durch angedeutete Wellenlinien dargestellt. Der Ultraschallsensor 10 weist eine Membran 20 auf. Diese Membran 20 kann durch die Signalerzeugungseinheit 12 angeregt werden. Dies bedeutet, dass die Signalerzeugungseinheit 12 die Membran 20 zum Schwingen bringen kann. Aufgrund der Schwingungen der Membran 20 können so die Ultraschallwellen 22 erzeugt werden. Insbesondere kann die Signalerzeugungseinheit 12 das erste Anregungssignal und das zweite Anregungssignal erzeugen und somit die Membran 20 anregen. Bevorzugt werden up-chirp Signale beziehungsweise down-chirp Signale zum Anregen der Membran eingesetzt. Eine Auswerteeinheit 14 ist insbesondere dazu ausgebildet, die Auslenkungen der Membran 20 zu messen. Diese Membranauslenkungen werden häufig in Form einer Spannung oder eines Spannungssignals registriert. Fig. 3 zeigt beispielhaft einen Frequenzverlauf für das erste Anregungssignal 29 und einen zweiten Frequenzverlauf für ein zweites Anregungssignal 31. Diese beiden Anregungssignale sind als Spannungsverläufe in Abhängigkeit von einer Frequenz F in Fig. 3 dargestellt. Der erste Spannungsverlauf 29 ist in diesem Fall derjenige, welcher durch das down-chirp Signal hervorgerufen wurde. Entsprechend ist das zweite Anregungssignal durch den zweiten Spannungsverlauf 31 dargestellt. Die x-Achse repräsentiert die Frequenz F, die y-Achse eine Spannung U. Bei einem vorgegebenen Frequenzbereich F' sind ein erstes Maximum M1 und ein zweites Maximum M2 des ersten beziehungsweise zweiten Spannungsverlaufs eingetragen. Diese beiden Maxima M1 und M2 werden jeweils verschoben. Dabei wird das erste Maximum M1 entlang einer Richtung R1 und das zweite Maximum M2 entlang einer Richtung R2 verschoben. Der Betrag der jeweiligen Verschiebungen ist dabei identisch. Dies bedeutet, dass die Verschiebungsrichtung R1 dieselbe Länge aufweist wie die Verschiebungsrichtung R2.

Die beiden Maxima M1 und M2 werden demnach um denselben Betrag zueinander verschoben. Sie werden bevorzugt derart verschoben, dass diese beiden Maxima zu einem Punkt verschmelzen. Dies führt bevorzugt zu verschobenen Spannungsverläufen, deren Maxima in einem einzigen Punkt zusammenfallen. In diesem Fall wird das erste Maximum M1 nach rechts verschoben und das zweite Maximum M2 wird nach links verschoben. Die beiden Richtungen R1 und R2 sind in dem Beispiel von Fig. 3 horizontal ausgebildet. Aufgrund dieser Verschiebungen ergeben sich zwei neue verschobene Spannungsverläufe 29', 31'. Diese beiden verschobenen Spannungsverläufe können zu einem neuen dritten Spannungsverlauf 30 umgewandelt werden. Der dritte Spannungsverlauf 30 verläuft dabei zwischen dem verschobenen ersten Spannungsverlauf 29' und dem verschobenen zweiten Spannungsverlauf 31'. Aus Gründen der Übersichtlichkeit sind die dazugehörigen verschobenen Spannungsverläufe in Fig. 3 nicht vollständig dargestellt. Insbesondere wird aus diesen beiden verschobenen Spannungsverläufen der dritte Spannungsverlauf 30 durch eine Mittelwertbildung ermittelt.

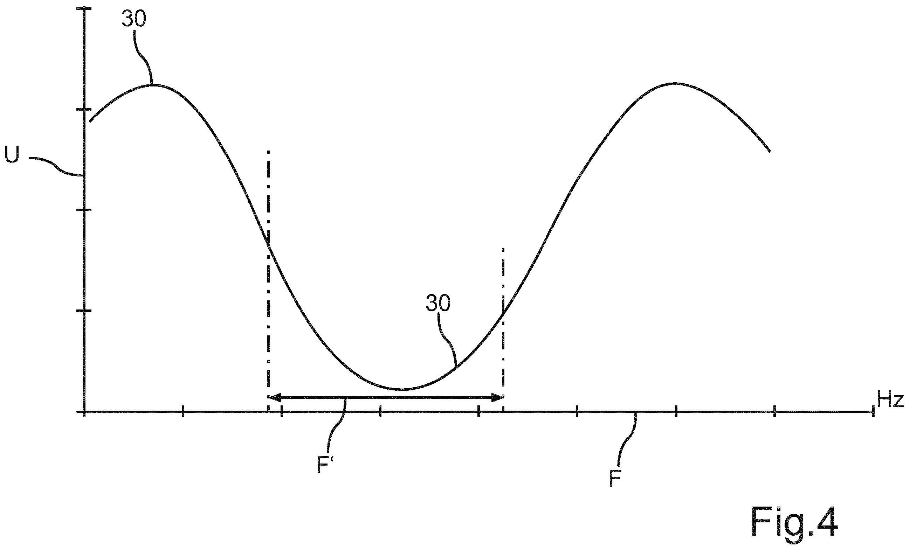

Dieser dritte Spannungsverlauf 30 ist in Fig. 4 gezeigt. Der dritte Spannungsverlauf 30 ist als ein Spannungsverlauf gegenüber der Frequenz F aufgetragen. Dieser dritte Spannungsverlauf 30 wird im weiteren Verlauf verwendet, um den Zustand der Membran 20 zu bestimmen. Dazu eröffnen sich verschiedene Möglichkeiten.

Im einfachsten Fall wird eine Resonanzfrequenz des dritten Spannungsverlaufs 30 ermittelt. Dies ist insbesondere ein Minimum des dritten Spannungsverlaufs 30 in einem vorgegebenen Frequenzbereich F'. Diese Resonanzfrequenz kann mit einer vorgegebenen Resonanzfrequenz verglichen werden. Dabei bezieht sich die vorgegebene Resonanzfrequenz auf vorgegebene beziehungsweise definierte Zustände der Membran 20. Diese vorgegebenen Zustände der Membran 20 können beispielsweise eine Bedeckung der Membran 20 mit Eis oder mit einer Verschmutzung umfassen. Es ist jedoch auch möglich, dass diese definierten Zustände eine Temperatur der Membran 20 oder eine Beschädigung der Membran 20 bedeuten. Anstelle des Ermittelns einer Resonanzfrequenz kann jedoch auch ein Modell zur kontinuierlichen Anregung der Membran 20 eingesetzt werden, um den Zustand der Membran 20 zu ermitteln. Dazu wird beispielsweise auf Formel 1 zurückgegriffen. Die in Formel 1 genannten elektrischen Parameter werden dabei so angepasst beziehungsweise justiert, dass der dritte Spannungsverlauf 30 nachgebildet wird. Dazu können verschiedene Optimierungsalgorithmen eingesetzt werden. Beispielsweise kann das Nelder-Mead oder das Gauß-Newton-Verfahren verwendet werden, um die jeweiligen elektrischen Parameter zu ermitteln. Wurden die elektrischen Parameter ermittelt, können diese mit vorgegebenen Referenzparametern verglichen werden. Dazu kann genau ein Referenzparameter für das Vergleichen ausgewählt werden. In aller Regel ist dies derjenige Parameter, welcher die größte Abweichung zu seinem vorgegebenen Referenzparameter aufweist.

Es kann jedoch auch vorgesehen sein, dass ein euklidischer Abstand aller elektrischen Parameter zu allen vorgegebenen elektrischen Parametern ermittelt wird. Insbesondere kann vorgesehen sein, dass jeweils ein Abstandsquadrat berechnet wird. Somit kann verhindert werden, dass gegenläufige Abweichungen sich zu 0 addieren. Dies könnte ansonsten ein verfälschtes Resultat hervorbringen. Im Idealfall existiert eine Datenbank, welche mehrere Referenzparameter zu unterschiedlichen vorgegebenen Zuständen der Membran aufweist. Ist die Datenbasis groß genug, kann neben der reinen Zustandsbestimmung zusätzlich auch der Zustand der Membran quantitativ bestimmt werden. So kann beispielsweise ermittelt werden, wie stark die Membran 20 verschmutzt ist beziehungsweise mit wie viel Eis eine Membran 20 bedeckt ist. Es kann eine Dicke einer Eisschicht auf der Membran 20 des Ultraschallsensors ermittelt werden.

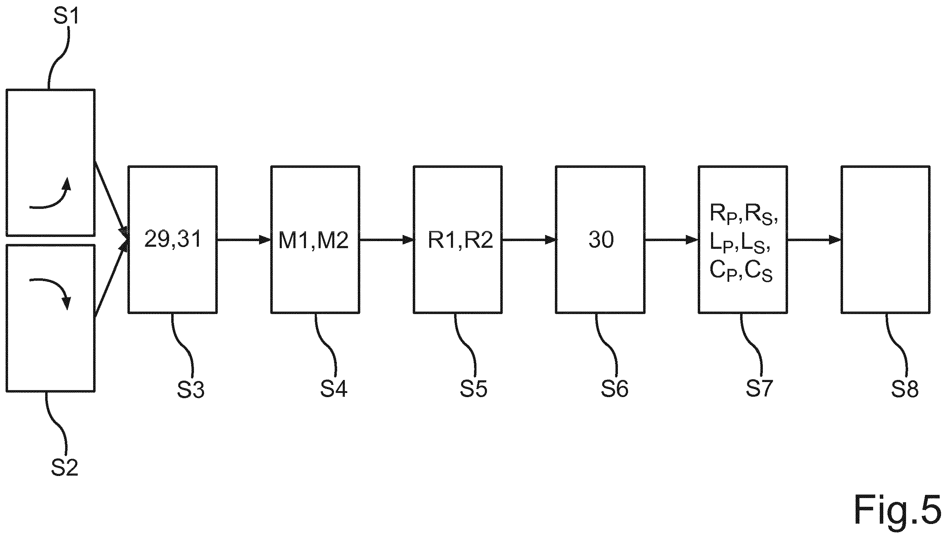

Fig. 5 zeigt beispielhaft einen Überblick über einige Verfahrensschritte. In einem Schritt S1 und einem Schritt S2 wird die Membran 20 mit einem up-chirp- beziehungsweise down-chirp-Signal angeregt. Das up-chirp Signal ist mit einem nach oben gebogenen Pfeil angedeutet. Entsprechend symbolisiert der nach unten gebogene Pfeil das down-chirp Signal. Aufgrund dieser beiden Anregungssignale wird in einem Schritt S3 die Membran 20 zum Schwingen angeregt. Es ist insbesondere vorgesehen, dass das erste Anregungssignal vor dem zweiten Anregungssignal erzeugt wird. Die Membran 20 wird somit bevorzugt nicht zeitgleich durch beide Anregungssignale angeregt. Aufgrund dieser Anregungen der Membran 20 können im Schritt S3 zwei unterschiedliche Spannungsverläufe gemessen werden.

In einem Schritt S4 können, wie in Fig. 3 gezeigt, die Positionen der beiden Maxima M1 und M2 bestimmt werden. Dies kann durch einfache und gängige Algorithmen erfolgen. Diese beiden Maxima M1 und M2 sind insbesondere jene Punkte, an denen die Ableitung des ersten Spannungsverlaufs 29 beziehungsweise zweiten Spannungsverlaufs 31 Null ist.

In einem Schritt S5 werden die Positionen der beiden Maxima um denselben Betrag verschoben. Die beiden Verschiebungsrichtungen sind dabei einander entgegengesetzt. Insbesondere kann die erste Richtung R1 horizontal ausgebildet sein und nach rechts weisen. Die zweite Richtung R2 ist demnach ebenfalls horizontal und nach links ausgerichtet.

In einem Schritt S6 wird der dritte Spannungsverlauf 30 ermittelt. Dies erfolgt vorzugsweise durch eine Mittelwertbildung der verschobenen Spannungsverläufe 29' und 31'. Dabei ist anzumerken, dass die Mittelwertbildung sich nicht auf den ursprünglichen ersten Spannungsverlauf 29 und den ursprünglichen zweiten Spannungsverlauf 31 bezieht. Der dritte Spannungsverlauf wird bevorzugt anhand des verschobenen ersten Spannungsverlaufs 29' und anhand des verschobenen zweiten Spannungsverlaufs 31' ermittelt. Diese beiden Spannungsverläufe sind in Fig. 3 mit 29' beziehungsweise 31' lediglich angedeutet, um die Übersichtlichkeit zu gewährleisten.

In einem Schritt S7 können elektrische Parameter des Modells zur kontinuierlichen Membrananregung ermittelt werden. Dazu wird beispielsweise auf die Formel 1 zurückgegriffen. Mittels mathematischer Optimierungsalgorithmen können die jeweiligen elektrischen Parameter bestimmt werden. Ein Vergleich dieser ermittelten elektrischen Parameter mit vorgegebenen Referenzparametern ermöglicht eine präzise Zustandsbestimmung der Membran 20. Somit können blockierte Zustände der Membran 20 erkannt werden. Es können jedoch auch andere Zustände, wie zum Beispiel eine Temperatur der Membran 20 oder ein Bedeckungsgrad der Membran 20 mit Eis, ermittelt werden.

Mithilfe der elektrischen Parameter können nicht nur verschiedene Zustände der Membran 20 erkannt werden, sondern darüber hinaus kann das Modell zur kontinuierlichen Anregung der Membran 20 auch ein Sensorverhalten beschreiben.

Dieses Sensorverhalten kann beispielsweise dazu genutzt werden, um Pegelschwankungen auszugleichen oder eine Temperaturkompensation des Ultraschallsensors 10 zu ermöglichen.

**Patentansprüche**

1. Verfahren zum Bestimmen eines Zustands einer Membran (20) eines Ultraschallsensors (10) während eines Betriebs des Ultraschallsensors (10) durch Ausführen folgender Verfahrensschritte:

    a) Beaufschlagen der Membran (20) des Ultraschallsensors (10) mit einem ersten Anregungssignal (29) in einem vorgegebenen ersten Frequenzverlauf,
    b) Messen eines ersten Spannungsverlaufs (29), der durch das erste Anregungssignal hervorgerufen wird, in Abhängigkeit von einer Frequenz (F) des ersten Anregungssignals,

    **gekennzeichnet durch** die weiteren Schritte:

    c) Beaufschlagen der Membran (20) des Ultraschallsensors (10) mit einem zweiten Anregungssignal, das einen vom ersten Frequenzverlauf unterschiedlichen zweiten Frequenzverlauf besitzt,
    d) Messen eines zweiten Spannungsverlaufs (31), der durch das das zweite Anregungssignal hervorgerufen wird, in Abhängigkeit von einer Frequenz (F) des zweiten Anregungssignals,
    e) Verschieben des ersten Spannungsverlaufs (29) um einen Betrag in eine erste Richtung (R1) und Verschieben des zweiten Spannungsverlaufs (31) um denselben Betrag in eine zweite Richtung (R2), sodass jeweilige Positionen von Maxima (M1, M2) der beiden Spannungsverläufe in einem vorgegebenen Frequenzbereich aneinander angeglichen werden, wobei eine Distanz der Maxima einen vorgegebenen Toleranzwert nicht überschreitet, und wobei die erste Richtung (R1) zur zweiten Richtung (R2) beim Verschieben der Spannungsverläufe (29, 31) entgegengesetzt ist,
    f) Ermitteln eines dritten Spannungsverlaufs (30), der zwischen dem verschobenen ersten Spannungsverlauf (29) und dem verschobenen zweiten Spannungsverlauf (31) aus Schritt e) verläuft,
    g) Bestimmen des Zustands der Membran (20) unter Verwendung des dritten Spannungsverlaufs (30) durch Ermitteln von mindestens einem elektrischen Parameter eines Modells zur kontinuierlichen Anregung der Membran (20) und Vergleichen des mindestens einen elektrischen Parameters mit mindestens einem vorgegebenen Referenzparameter und insbesondere Bestimmen des Zustands der Membran (20) anhand eines Vergleichs einer Resonanzfrequenz des dritten Spannungsverlaufs (30) als der mindestens eine elektrische Parameter mit einer vorgegebenen Resonanzfrequenz als der vorgegebene Referenzparameter bestimmt wird.

2. Verfahren nach Anspruch 1, wobei das erste Anregungssignal (29) als down-chirp Signal und das zweite Anregungssignal (31) als up-chirp Signal ausgebildet ist.

3. Verfahren nach Anspruch 1 oder 2, wobei das Modell zur kontinuierlichen Anregung der Membran (20) einen ersten Widerstand ($R_p$), einen erste Induktivität ($L_p$) und eine erste Kapazität ($C_p$) in einer Parallelschaltung sowie einen zweiten Widerstand ($R_s$), eine zweite Induktivität ($L_s$) und eine zweite Kapazität ($C_s$) in einer Reihenschaltung als die elektrischen Parameter des Modells aufweist.

4. Verfahren nach einem der vorigen Ansprüche, wobei für vorgegebene Zustände der Membran (20) Referenzparameter vorgegeben sind und derjenige genau eine elektrische Parameter des Modells mit dem dazugehörigen Referenzparameter verglichen wird, der die größte Abweichung zu seinem zughörigen Referenzparameter aufweist, um den Zustand der Membran (20) zu bestimmen.

5. Verfahren nach Anspruch 4, wobei die vorgegebenen Zustände der Membran (20) eine Bedeckung der Membran (20) mit Eis oder einer Verunreinigung bedeuten.

6. Verfahren nach Anspruch 4, wobei die vorgegebenen Zustände der Membran (20) eine Temperatur der Membran (20) bedeuten.

7. Verfahren nach einem der vorigen Ansprüche, wobei anhand des mindestens einen ermittelten elektrischen Parameters ein Bedeckungsgrad und/oder ein Verschmutzungsgrad der Membran (20) zu einem quantitativen Bestimmen des Zustands der Membran (20) ermittelt werden.

8. Verfahren nach einem der vorigen Ansprüche, wobei im Falle einer beschädigten oder verschmutzten Membran (20) ein Warnsignal erzeugt wird.

9. Verfahren nach einem der vorigen Ansprüche, wobei der dritte Spannungsverlauf (30) in Schritt f) durch Mittelwertbildung des ersten und zweiten Spannungsverlaufs (29,31) ermittelt wird.

10. Analysesystem für ein Kraftfahrzeug (16) mit

- einem Ultraschallsensor (10), der eine Membran (20) aufweist,
- einer Signalerzeugungseinheit (12) zum Erzeugen eines ersten Anregungssignals (29) und eines zweiten Anregungssignals (31) zum Anregen der Membran (20) des Ultraschallsensors (20), und
- eine Auswerteeinheit (14), die ausgebildet ist, ein Verfahren nach einem der vorigen Ansprüche auszuführen.

11. Analysesystem nach Anspruch 10, wobei das erste Anregungssignal (29) als down-chirp Signal und das zweite Anregungssignal als up-chirp Signal (31) ausgebildet sind.

12. Fahrzeugassistenzsystem mit einem Analysesystem nach einem der Ansprüche 10 bis 11.

13. Computerprogrammprodukt mit Programmcodemitteln, welche in einem computerlesbaren Medium gespeichert sind, um das Verfahren nach einem der vorhergehenden Ansprüche 1 bis 9 durchzuführen, wenn das Computerprogrammprodukt auf einem Prozessor einer elektronischen Auswerteeinheit abgearbeitet wird.

**Claims**

1. Method for determining a state of a membrane (20) of an ultrasonic sensor (10) during operation of the ultrasonic sensor (10) by executing the following method steps:

a) Applying a first excitation signal (29) to the membrane (20) of the ultrasonic sensor (10) in a predetermined first frequency progression,
b) Measuring a first voltage progression (29), which is caused by the first excitation signal, as a function of a frequency (F) of the first excitation signal,

**characterized by** the further steps:

c) Applying a second excitation signal to the membrane (20) of the ultrasonic sensor (10), which has a second frequency progression different from the first frequency progression,
d) Measuring a second voltage progression (31), which is caused by the second excitation signal, as a function of a frequency (F) of the second excitation signal,
e) Shifting the first voltage progression (29) by an amount in a first direction (R1) and shifting the second voltage progression (31) by the same amount in a second direction (R2), so that respective positions of maxima (M1, M2) of the two voltage progressions in a predetermined frequency range are aligned with each other, wherein a distance of the maxima does not exceed a predetermined tolerance value, and wherein the first direction (R1) is opposite to the second direction (R2) when shifting the voltage progressions (29, 31),
f) Determining a third voltage progression (30) that runs between the shifted first voltage progression (29) and the shifted second voltage progression (31) from step e),
g) Determining the state of the membrane (20) using the third voltage progression (30) by determining at least one electrical parameter of a model for continuous excitation of the membrane (20) and comparing the at least one electrical parameter with at least one predetermined reference parameter, and in particular
determining the state of the membrane (20) based on a comparison of a resonance frequency of the third voltage progression (30) as the at least one electrical parameter with a predetermined resonance frequency as the predetermined reference parameter.

2. Method according to claim 1, wherein the first excitation signal (29) is designed as a down-chirp signal and the second excitation signal (31) is designed as an up-chirp signal.

3. Method according to claim 1 or 2, wherein the model for continuous excitation of the membrane (20) has a first resistor ($R_p$), a first inductance ($L_p$) and a first capacitance ($C_p$) in a parallel circuit as well as a second resistor ($R_s$), a second inductance ($L_s$) and a second capacitance ($C_s$) in a series circuit as the electrical parameters of the model.

4. Method according to any one of the preceding claims, wherein reference parameters are predetermined for predetermined states of the membrane (20) and exactly one electrical parameter of the model is compared with the associated reference parameter, which shows the greatest deviation from its associated reference parameter, in order to determine the state of the membrane (20).

5. Method according to claim 4, wherein the predetermined states of the membrane (20) indicate a covering of the membrane (20) with ice or a contamination.

6. Method according to claim 4, wherein the predetermined states of the membrane (20) indicate a temperature of the membrane (20).

7. Method according to any one of the preceding claims, wherein a degree of coverage and/or a degree of contamination of the membrane (20) is determined based on the at least one determined electrical parameter for a quantitative determination of the state of the membrane (20).

8. Method according to any one of the preceding claims, wherein in the case of a damaged or contaminated membrane (20), a warning signal is generated.

9. Method according to any one of the preceding claims, wherein the third voltage progression (30) in step f) is determined by averaging the first and second voltage progressions (29, 31).

10. Analysis system for a motor vehicle (16) with

   - an ultrasonic sensor (10) that has a membrane (20),
   - a signal generation unit (12) for generating a first excitation signal (29) and a second excitation signal (31) for exciting the membrane (20) of the ultrasonic sensor (20), and
   - an evaluation unit (14) that is designed to execute a method according to any one of the preceding claims.

11. Analysis system according to claim 10, wherein the first excitation signal (29) is designed as a down-chirp signal and the second excitation signal is designed as an up-chirp signal (31).

12. Vehicle assistance system with an analysis system according to any one of claims 10 to 11.

13. Computer program product with program code means stored in a computer-readable medium for carrying out the method according to any one of the preceding claims 1 to 9 when the computer program product is executed on a processor of an electronic evaluation unit.

**Revendications**

1. Procédé pour déterminer un état d'une membrane (20) d'un capteur à ultrasons (10) pendant le fonctionnement du capteur à ultrasons (10) en exécutant les étapes de procédé suivantes :

   a) Appliquer un premier signal d'excitation (29) à la membrane (20) du capteur à ultrasons (10) dans une première progression de fréquence prédéterminée,
   b) Mesurer une première progression de tension (29), qui est causée par le premier signal d'excitation, en fonction d'une fréquence (F) du premier signal d'excitation,

   **caractérisé par** les étapes supplémentaires suivantes :

   c) Appliquer un second signal d'excitation à la membrane (20) du capteur à ultrasons (10), qui a une seconde progression de fréquence différente de la première progression de fréquence,
   d) Mesurer une seconde progression de tension (31), qui est causée par le second signal d'excitation, en fonction d'une fréquence (F) du second signal d'excitation,
   e) Décaler la première progression de tension (29) d'une certaine quantité dans une première direction (R1) et décaler la seconde progression de tension (31) de la même quantité dans une seconde direction (R2), de sorte que les positions respectives des maxima (M1, M2) des deux progressions de tension dans une plage de fréquences prédéterminée soient alignées l'une avec l'autre, où une distance des maxima ne dépasse pas une valeur de tolérance prédéterminée, et où la première direction (R1) est opposée à la seconde direction (R2) lors du décalage des progressions de tension (29, 31),

f) Déterminer une troisième progression de tension (30) qui se situe entre la première progression de tension décalée (29) et la seconde progression de tension décalée (31) de l'étape e),

g) Déterminer l'état de la membrane (20) en utilisant la troisième progression de tension (30) en déterminant au moins un paramètre électrique d'un modèle pour l'excitation continue de la membrane (20) et en comparant l'au moins un paramètre électrique avec au moins un paramètre de référence prédéterminé, et en particulier déterminer l'état de la membrane (20) sur la base d'une comparaison d'une fréquence de résonance de la troisième progression de tension (30) en tant qu'au moins un paramètre électrique avec une fréquence de résonance prédéterminée en tant que paramètre de référence prédéterminé.

2. Procédé selon la revendication 1, dans lequel le premier signal d'excitation (29) est conçu comme un signal à modulation de fréquence descendante (down-chirp) et le second signal d'excitation (31) est conçu comme un signal à modulation de fréquence ascendante (up-chirp).

3. Procédé selon la revendication 1 ou 2, dans lequel le modèle pour l'excitation continue de la membrane (20) comporte une première résistance (Rp), une première inductance (Lp) et une première capacité (Cp) en circuit parallèle, ainsi qu'une seconde résistance (Rs), une seconde inductance (Ls) et une seconde capacité (Cs) en circuit série comme paramètres électriques du modèle.

4. Procédé selon l'une quelconque des revendications précédentes, dans lequel des paramètres de référence sont prédéterminés pour des états prédéterminés de la membrane (20) et exactement un paramètre électrique du modèle est comparé avec le paramètre de référence associé, qui montre le plus grand écart par rapport à son paramètre de référence associé, afin de déterminer l'état de la membrane (20).

5. Procédé selon la revendication 4, dans lequel les états prédéterminés de la membrane (20) indiquent un recouvrement de la membrane (20) par de la glace ou une contamination.

6. Procédé selon la revendication 4, dans lequel les états prédéterminés de la membrane (20) indiquent une température de la membrane (20).

7. Procédé selon l'une quelconque des revendications précédentes, dans lequel un degré de recouvrement et/ou un degré de contamination de la membrane (20) est déterminé sur la base de l'au moins un paramètre électrique déterminé pour une détermination quantitative de l'état de la membrane (20).

8. Procédé selon l'une quelconque des revendications précédentes, dans lequel, en cas de membrane (20) endommagée ou contaminée, un signal d'avertissement est généré.

9. Procédé selon l'une quelconque des revendications précédentes, dans lequel la troisième progression de tension (30) à l'étape f) est déterminée en faisant la moyenne des première et seconde progressions de tension (29, 31).

10. Système d'analyse pour un véhicule à moteur (16) comprenant :

   ◦ un capteur à ultrasons (10) qui a une membrane (20),
   ◦ une unité de génération de signaux (12) pour générer un premier signal d'excitation (29) et un second signal d'excitation (31) pour exciter la membrane (20) du capteur à ultrasons (20), et
   ◦ une unité d'évaluation (14) qui est conçue pour exécuter un procédé selon l'une quelconque des revendications précédentes.

11. Système d'analyse selon la revendication 10, dans lequel le premier signal d'excitation (29) est conçu comme un signal à modulation de fréquence descendante (down-chirp) et le second signal d'excitation (31) est conçu comme un signal à modulation de fréquence ascendante (up-chirp).

12. Système d'assistance au véhicule avec un système d'analyse selon l'une quelconque des revendications 10 à 11.

13. Produit de programme informatique avec des moyens de code de programme stockés sur un support lisible par ordinateur pour exécuter le procédé selon l'une quelconque des revendications précédentes 1 à 9 lorsque le produit de programme informatique est exécuté sur un processeur d'une unité d'évaluation électronique.

Fig.1

Fig.2

Fig.3

EP 3 884 296 B1

Fig.4

Fig.5

EP 3 884 296 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014201482 A1
- DE 102009040992 B4
- DE 102012216968 A1
- DE 102017105043